# EUROPEAN PATENT SPECIFICATION

(11) **EP 2 656 001 B1**
(45) Date of publication and mention of the grant of the patent: **20.02.2019**
(21) Application number: 11810834.9
(22) Date of filing: 21.12.2011
(51) Int. Cl.: F41H 11/00, F41H 11/136, F41H 7/02, B60R 21/01, F41H 5/007, F41H 7/04

(54) **EXPLOSION DETECTION METHOD AND APPARATUS, STABILIZING DEVICE FOR A VEHICLE, STABILIZED VEHICLE, PREPARED VEHICLE**
EXPLOSIONSDETEKTIONSVERFAHREN UND VORRICHTUNG, STABILISIERUNGSVORRICHTUNG FÜR EIN FAHRZEUG, STABILISIERTES FAHRZEUG, PRÄPARIERTES FAHRZEUG
PROCÉDÉ ET APPAREIL DE DÉTECTION D'EXPLOSION, DISPOSITIF STABILISANT DE VÉHICULE, VÉHICULE STABILISÉ, VÉHICULE PRÉPARÉ

(30) Priority: 30.12.2010 DK 201001192
(43) Date of publication of application: 30.10.2013
(73) Proprietor: TenCate Active Protection APS, 5492 Vissenbjerg (DK)
(72) Inventor: SVANE, Jørgen Leif, 6200 Åbenrå (DK); RIISGARD, Benjamin, 5492 Vissenbjerg (DK); BERTELSEN, Peter, 5492 Vissenbjerg (DK); JENSEN, Ken, 5492 Vissenbjerg (DK)
(74) Representative: Manitz Finsterwald Patentanwälte PartmbB
(86) International application number: PCT/EP2011/073665
(87) International publication number: WO 2012/085138

(56) References cited:
- EP-A2- 2 362 177
- WO-A1-2010/067093
- DE-A1- 10 259 918
- DE-B3- 10 317 314
- US-A- 4 573 396
- DARPA: "Persistent Stare Exploitation and Analysis System (PerSEAS)", FEDERAL BUSINESS OPPORTUNITIES , 18 September 2009 (2009-09-18), XP002673854, Retrieved from the Internet: URL:https://www.fbo.gov/index?s=opportunit y&mode=form&id=eb5dd436ac371ce79d91c84ec4e 91341&tab=core&_cview=1 [retrieved on 2012-04-13]

## Description

The invention relates to explosion detection and to vehicle stabilization.

Vehicles may become unstable upon external impact. A typical example for external impact is a mine exploding below a vehicle. Amongst others, such an explosion generates, for a certain time, a high pressure between vehicle bottom and ground, this pressure generating an upward force and, depending on symmetry of position, also rotational momentum. The upwardly directed force, depending on magnitude, may lift the vehicle off the ground. Once off the ground, an imparted momentum leads to rotation of the vehicle around a horizontal axis. Naturally, this all can lead to severe injuries of the occupants and to damage of the vehicle.

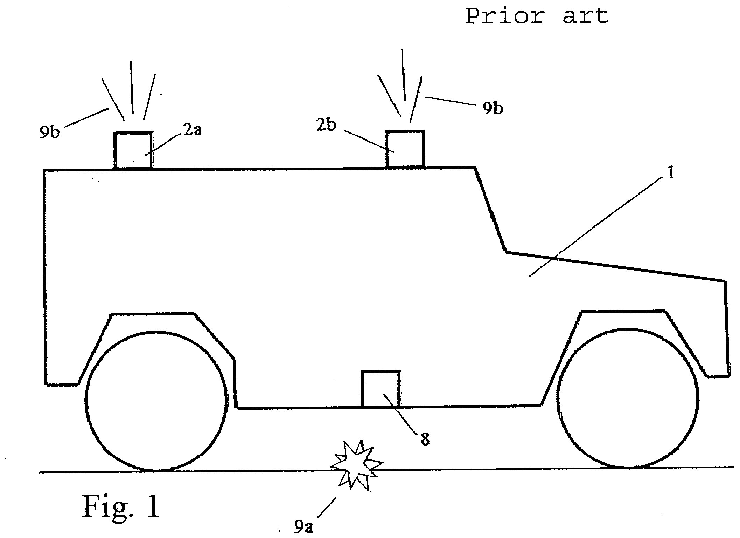

For counteracting such events, stabilizing devices have been proposed that detect an explosion and generate an opposing force directed against the upwardly directed force of the explosion.
WO 2010/067093 A1 is an example for this and figure 1 shows a related arrangement. The vehicle comprises pressure detection means 8 provided below the vehicle and vehicle stabilizing means 2 on the roof top of the vehicle. Upon detection of an explosion, symbolized by 9a in figure 1, the vehicle stabilizing means 2 will be ignited and generate thereafter a downwardly directed force counteracting the upwardly directed force from the explosion 9a. The stabilizing means is a rocket motor burning a propellant and generating a gas jet 9b in an upward direction that generates a downwardly directed thrust.

The disadvantage of this known system is that detection is relatively unreliable in rough environments.

Other examples of prior art are DE 2822106, DE 31183774, DE 10259918, DE 19013845, DE 19631715, DE 19832662, DE 19909905, DE 202005006655, EP 1382932, EP 1467171, RU 2003127462, US 3580354, US 3995656, US 5012721, US 5401055, US 5765783, US 5931409, US 6065558, US 6095459, US 6170847, US 6394738, US 6556908, US 6588799, US 6938924, US 7494153, US 2004/0200347, US 2005/0230176, WO 2002/039048, WO 2004/106840, WO 2005/113330, WO 2008/063205, WO 2009/114172, WO 2009/117648.

DE 10259918 A1 describes a mine protection device that uses an optical sensor or, as an alternative, a pressure or acceleration sensor.

US 4573396 describes a nuclear blast hardened mobile vehicle using flash sensors for detecting a nuclear blast.

It is the object of the invention to provide an explosion detection apparatus and method that is reliable in detection and thus allows a well adapted counter measure.

This object is accomplished by the features of claim 1.

Such an explosion detection apparatus uses quantities detectable only when the shockwave has reached the vehicle (pressure, acceleration, deformation, relative movement). It may be used in addition to, or instead of, the earlier mentioned apparatus. By evaluating both information coming with the speed of light (electromagnetic waves) and information upon impact on the vehicle the detection results become more reliable and may comprise also a quantitative measurement on the impact experienced by the vehicle. The quantitative measurement may be used for making quantitative determinations for operating counter measures, such as determining the timing of counter measures and/or determining a selectable quantity of counter measures.

Explosion detections may be conducted periodically or with a maximum cycle time. Such a maximum cycle time or period may be less than 50 psec, less than 20 psec, less than 10 psec or less than 5 psec. Assuming that in a typical scenario it takes about 100 psec for an explosion shockwave to reach a vehicle, the mentioned periods allow completion of a full explosion detection cycle within the mentioned delay of 100 psec so that, when electromagnetic radiation is used, detection can be accomplished before the shockwave reaches the vehicle.

Explosion detection means based on electromagnetic radiation may comprise radar equipment monitoring the path under the vehicle, particularly also the underground below the path surface, light equipment or laser equipment evaluating transmitted and/or reflected and/or scattered light or laser light in the space underneath the vehicle, radio frequency equipment monitoring received radio frequencies, preferably in one or more predetermined frequency bands, or infrared detection in a given infrared range (near, mid, far). Likewise, explosion detection may be accomplished by motion detection at corresponding path portions within sequentially scanned or captured and pixeled images of a path section. The subject of observation and motion detection is then the surface of the considered path portion. When the surface exhibits a significant upward motion, this is taken as an indication of an explosion. Regular motion (forward driving movement) of the vehicle is taken into account for finding corresponding path portions in consecutive images. One or more pickups (cameras) of appropriate fields of view may be used for capturing the path portion underneath the vehicle.

The mechanical detection means may comprise one or more different means such as a pressure sensor, an acceleration sensor, relative motion detection amongst vehicle components, one or more gyroscopes, one or more proximity sensors, or a crush element. It may also comprise deformation detection or bending detection by appropriate means such as strain gauges or fibers conducting light or laser light and attached to a vehicle component, particularly the vehicle bottom, changing its transmission characteristics upon deformation so that monitoring transmitted light gives information on a possible impact.

The invention further provides a stabilizing device according to appended claim 6. Said stabilizing device
for a vehicle comprises an emitter having emitting means for emitting material and attachment means for attaching the emitter to a structural part of the vehicle, and has detection means for detecting an external impact, and has triggering means for triggering the emitter in accordance with the detection result from the detection means. The detection means are an apparatus according to any of the appended claims 1-5.

The triggering means may have timing control means for controlling timing of triggering the emitter upon explosion detection. Particularly, triggering of the emitter may be set at a predetermined time after detection, or set to be within a predetermined time window after detection. When explosion detection based on radiation is utilized, the time window may be 20 psec to 200 psec after detection.

Plural emitters may be provided that are separately ignitable and that are mounted at different portions of the vehicle. The triggering means is adapted to selectively/separately trigger one or more or all of the emitters, preferably also selectively/separately in time.

One or more of the emitters may be mounted on a side wall (left side, right side) of the vehicle, and one or more of the emitters may be mounted on the roof top, then preferably along the center line of the vehicle in driving direction, as seen from above.

The device may further comprise means for automatic messaging and sending information through an appropriate wireless channel upon detection of an explosion to a command centre for further processing/use and/or may comprise means for actuating safety devices inside of the vehicle.

The stabilizing device may also be designed as a stand alone device, i.e. without external electric or electronic components. The detection means may be a crush detector preferably at or inside the emitter, and the triggering means may be a stab detonator provided in the emitter.

Likewise, more or less sophisticated control equipment may be provided, be it dedicated hardware or be it the general control hardware of the vehicle running certain routines/software. The controller, be it dedicated hardware or the general vehicle control system, may comprise a sequential controller, a field programmable gate array (FPGA), two or more parallel processing units, a regular computer such as a PC, or the like.

A stabilizing method for stabilizing a vehicle against the effect of an external impact comprises detecting an explosion, upon detection emitting material in an upward direction.

The invention further provides a vehicle according to one of the appended claims 14 and 17, adapted for mounting the mentioned stabilizing device, but not having all of its components. In training or in civil situations it may, for example, be desirable to drive the vehicle without active/critical chemical substances and without unnecessary masses attached to it. So, the vehicle may comprise mounting structures for the emitter, and/or may comprise wiring required for operating the emitter and/or may comprise an explosion detection apparatus or mounting portions for it.

The vehicle may comprise bulkheads inside the vehicle compartment for reinforcing the lower corners of the vehicle compartment. Seen from the top, an emitter may be provided at the outside side wall of the vehicle at a position where inside the vehicle a bulkhead is provided. The emitter may even be connected to the bulkhead.

In the following, embodiments and features of the invention will be described with reference to the attached drawings in which
figure 1 shows prior art,
figure 2 shows a first detection apparatus schematically,
figure 3 shows a second detection apparatus schematically,
figure 4 shows an overall controller and an emitter,
figure 5 shows a more detailed schematic view of a triggering device,
figure 6 shows an implement of an emitter,
figure 7 shows mounting possibilities of emitters,
figures 8 and 9 shows bulkheads and their use in conjunction with the invention.

In the following description, described features shall be deemed combinable with each other also when this is not explicitly said, as far as a combination is not excluded by technical reasons. Disclosure of apparatuses and apparatus features shall be understood also as disclosure of method or methods features implemented by the respective apparatus or apparatus features, and vice versa. Same numerals in the various figures denote same components.

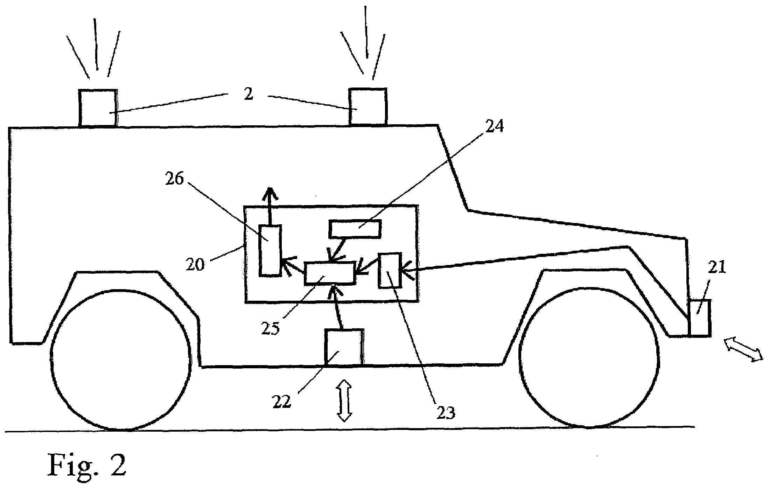

Figure 2 shows a schematic side view of a vehicle carrying an explosion detection apparatus. The apparatus comprises a first path pickup means 21 and a second path pickup means 22. The first pickup 21 looks ahead of the vehicle in driving direction, and may also look somewhat sideways. It may be mounted somewhere at the front of the vehicle and may have a field of view of not less than 45° or 60°, preferably centered around the forward direction. It may be a first camera generating pixeled image data. The second pickup 22 looks below the vehicle and may be a second camera generating pixeled image data. It also may have a field of view of not less than 45° or 60° or 90°. Regarding mounting, it may be sufficient that the first pickup means 21 monitors a path portion ahead of that monitored by the second pickup means 22. The first pickup means may also be provided below the vehicle. Instead of pixeling cameras, a scanning device may constitute the first and/or second pickup means 21, 22, e.g. a laser scanner.

Not shown image processing means may extract features from said picked up signals and may lead to data that may describe the path of the vehicle in the three dimensions. The two pickup means 21 and 22 may generate qualitatively same data, but of course, at the same time, of different path portions as respectively seen by them.

The first pickup means 21 looking forward/ahead generate data that are stored in a memory 23. The data from the second pickup means 22 may also be stored or may be used in real time. Motion detection means 24 tell the system regular motion data of the vehicle such as the vehicle speed or curve radius. At least parts of the data from the second pickup means 22 are compared with corresponding data (i. e. data describing the same path portion) from the first pickup means 21 stored in memory 23. Finding the corresponding data in the first path data is made with reference to the data from the motion detection means describing which distance and which direction (straight, curve) the vehicle has traveled meanwhile. Real-time or recently obtained data from the second pickup 22 are compared with corresponding earlier obtained data from the first pickup 21, the compared data taken such that they describe the same path portion.

The comparing means compare the corresponding data from the first pickup means 21 and from the second pickup means 22. In a stable situation both data should be substantially the same so that a corresponding comparison should not show a difference. Naturally, in real environments a difference will practically always be given. Accordingly, the comparing means 25 may give quantitative difference data (quantitative measure) indicating how different the compared data are. A first judging means 26 receives the result from the comparing means 25 and judges that an explosion has occurred when the data from the comparing means 25 match a certain criterion, for example exceed a predetermined threshold. The result from the first judging means 26 can then be used for other measures, such as triggering the emitters, triggering automated messaging, activating internal safety devices such as airbags, seatbelt fasteners, intelligent clothing or the like. The judging means 26 may forward the result from the comparing means 25 to the emitter triggering means in parallel to a judgment result.

Instead of providing two separate path pickup means 21 and 22, also only one pickup means 22 looking below the vehicle may be provided, such as one or more cameras with an appropriate field of view, and the comparison for detection is made amongst different pickups (images) from the second pickup means, again with reference to motion data describing the regular vehicle movement as described earlier, for finding corresponding portions in the various images. Motion detection algorithms may be used.

The comparing means may have filtering means for recognizing, and discarding from detection, uncritical path surface modifications between first and second pickup, such as tire tracks generated by the vehicle itself when driving a curve, stones tossed into the path by the vehicle or the like. Filtering may comprise making a second comparison after a first comparison showed a significant difference between first pickup and second pickup. Since the second pickup means has also a certain field of view, comparisons may also be made amongst different pickups from the second pickup means, again with reference to motion data describing the regular vehicle movement.

The hardware may be dedicated hardware or may be a routine running on otherwise provided hardware. In view of processing speed, data amount, etc., dedicated hardware is preferred. The relevant information, namely the path appearance below the vehicle picked up by the second pickup means 22 reaches the vehicle, and particularly the pickup means 22, with the speed of light, and accordingly well before the impact from the explosion reaches the vehicle. Then, processing speed of the hardware becomes the bottleneck. Assuming an average value of around 100 psec for the shockwave of an explosion reaching the bottom of an average vehicle, cycle time for path pickup and comparison is preferably less then one of the values of 50 psec, 20 µsec, 10 psec or 5 psec, depending on hardware. Hardware may be a regular computer or a parallel processing installation or an FPGA.

Valuable time is gained with quick explosion detection as described above. The gained time may be used for timely triggering counter measures, and/or for making further determinations for determining an appropriate response.

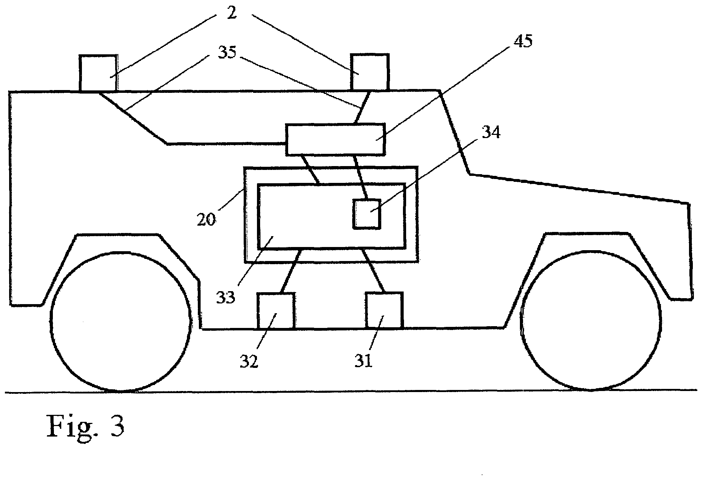

Figure 3 shows another detection apparatus. It comprises a first detection device 31 and a second detection device 32. The first detection device 31 utilizes electromagnetic waves including imaging based on path pickup as described, e.g., above. The second detection device 32 may be a qualitatively different detection apparatus and/or may also use electromagnetic waves or may use a mechanical quantity reflecting an evolving explosion. A second explosion judging means 33 receives the detection results from the first detection device 31 and from the second detection device 32 and derives an overall detection result therefrom. It may include means 34 for generating a quantitative measure for the explosion. The quantitative information may include one or more data describing strength of the explosion, the location (such as left side, right side, front, rear, center), the experienced momentum (i.e. rotational impact), and the like.

By combining detection results from plural, and preferably qualitative different detection devices, the resulting data of the detection is more reliable, is less prone to faulty detections and is richer in information. Countermeasures can then be adapted quantitatively and qualitatively to the detected explosion.

Examples for the first detection device 31 utilizing electromagnetic waves is radar equipment, monitoring the ground underneath the vehicle, possibly penetrating also the ground below the road surface (underground). It may also comprise a combination of light/laser light emission and corresponding detection for detecting one or more of transmitted and/or reflected and/or scattered light in a space underneath the vehicle. It may also comprise radio frequency monitoring. Explosives, upon exploding emit characteristic electromagnetic radiation that can be detected and evaluated. The radiation falls in one or more known frequency bans. Likewise, microwave detection and/or infrared detection may be utilized, preferably in the near infrared range (0,8 µm to 1,5 µm wavelength), and/or in the mid-infrared range (1,5 µm to 6 µm) and/or in the far infrared range (6 µm to 40 µm). A thermopile or thermocouple may be used for this. Likewise, particle detectors (electron detectors) or photon detectors may be used, preferably on a semiconductor basis. A Doppler device or system based on radio frequencies may be used. Likewise, an apparatus as described with reference to fig. 2 may be used as first detection device 31.

The second detection device 32 may comprise one or more means such as a pressure sensor provided on the vehicle and detecting ambient pressure that naturally rises when a shockwave hits a vehicle. It may also comprise an acceleration sensor or a relative motion detector for detecting relative motion amongst certain vehicle components. Gyroscopes may also be provided for detecting rotational movement or acceleration. Likewise, approximate sensor or crush element may be used. Similarly, deformation of vehicle components such as a bottom plate or a particular shielding plate may be monitored by appropriate means, such as strain gauges or light fibres that change their transmission characteristics upon deformation. They may conduct light from a light source provided at one end of the fibre and may have a sensor with subsequent evaluation at the other end of the fibre. The fibre itself is firmly attached to a component, deformation of which is to be monitored, such as the bottom plate or a shield.

Generally speaking, one or more or all of the sensing devices described above that are exposed to the environment can be provided with cleaning means and/or with means for preventing adherence of dirt and dust for avoiding the sensors being blocked in use. Sprinkler means or means for supplying compressed air may be provided for this purpose.

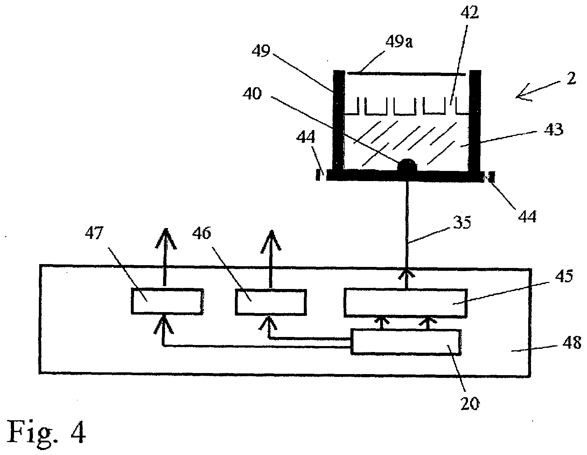

Figure 4 shows an example of a stabilizing device. It comprises an emitter 2 that in turn comprises an active substance such as explosive or combustible material 43, preferably one or more outlets or nozzles 42 for emitting the reaction product of explosion or combustion, and attachment means 44 for attaching the emitter 2 to a structural part of the vehicle. It further comprises a container structure 49 for accommodating the explosive or combustible material 43 and preferably the nozzles 42. It may also comprise some kind of closing 49a that can easily be removed by the material to be ejected.

The emitter 2 may eject a reaction product of the active substance 43. The emitter may be a thruster generating thrust in a downward direction by ejecting in an upward direction through said outlets or nozzles of a combustion chamber reactive components obtained from combusting material 43. Thrust is generated as reactive force from the ejection of the mass of the reactive material, and is generated by pressure differences in the pressure chamber.

Instead of an active material 43, the emitter 2 may also hold a compressed fluid, such as gas in a high pressure container, again to be released upon activation thorough openings or nozzles.

Likewise, it is conceivable to provoke in the emitter a dust explosion of an appropriate material for accomplishing the desired ejection.

A controller comprises an explosion detection apparatus 20 that may be built as mentioned above and triggering means 45 receiving the detection result from the detection apparatus 20 and connected to the emitter 2, and particularly to some kind of igniting means or detonating means provided at or for said explosive or combustible material 43. The detection means 20 may also start an automated messaging means 46 for automatically dispatching a message after detecting an explosion through an appropriate wireless channel, the message, for example, containing position data of the vehicle, severeness of the explosion, and the like. Likewise, activation means 47 for safety devices at or within the vehicle, such as airbags, seatbelt fasteners, intelligent clothing, may receive information from the explosion detection means 20.

40 symolizes an igniter or detonator for the active material 43. It may be an electrical or a laser igniter or detonator. It receives its triggering signal from the triggering means 45 preferably through electrical wiring.

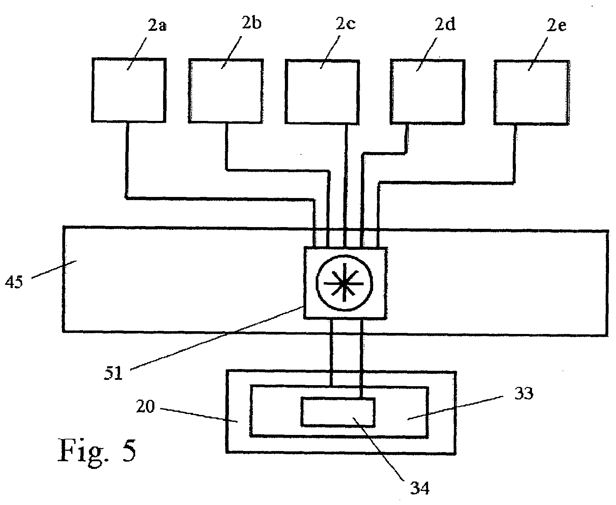

Figure 5 shows triggering means 45 for the emitters 2. Shown is an embodiment with plural emitters 2a to 2e. They can individually be triggered, and accordingly, the triggering means 45 is adapted to individually trigger them. The individual triggering may include both the decision whether or not to trigger a device, and if yes, when to trigger it. Accordingly, the triggering means 45 may have timing means 51 and may receive information from the detection apparatus 20. It may particularly receive information from the means 34 for generating a quantitative measure. In accordance with qualitative and quantitative indications about the detected explosion, the timing means 51 may generate triggering signals for one or plural emitters 2. It is pointed out that it may be decided that not all emitters 2 are ignited. Some of them may remain ununsed. Likewise, ignition timing of several ignited emitters 2 may be different.

The triggering means 45 may be formed as a unit with the hardware of the detection apparatus 20 or may be separated therefrom, connected to the detection apparatus 20 through appropriate wiring. At the respective emitters 2, respective igniters or detonators may be provided that may be electrically activated by appropriate signals from the triggering means 45. Accordingly, wiring 35 may be provided between each of the emitters 2 and the triggering means 45.

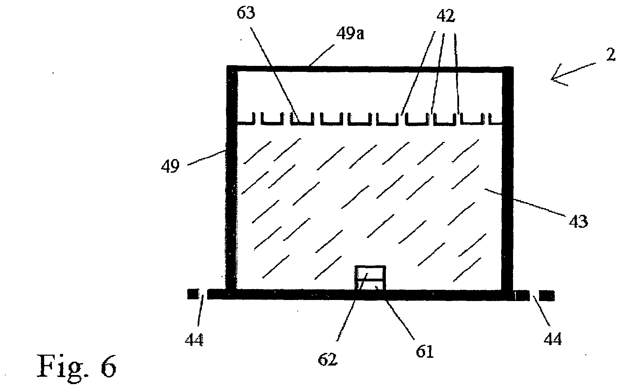

Figure 6 shows a close view of an emitter 2. It may have a container-like structure with a container 49 that may have side walls and a bottom wall. 44 are attachment means for attaching the emitter 2 to a structural part of the vehicle. It may, in a simple case, be a flange with a through-hole for fastening the emitter 2 with screws to prepared portions of the vehicle. The container structure may have an opening on the top that may be closed by a weak closure 49a, such as a lid or a cap. The weak closure 49a is constructed such that it is automatically removed when the emitter 2 is activated.

The container 49 holds the active substance 43, preferably an explosive or a combustible material. When activated, reaction products may escape through openings 42 of an internal wall 63. The internal wall 63 may be provided on top of the active material 43 and may define a combustion chamber together with the other walls of the container structure 49. The internal wall 63 may have plural openings 42. They may be designed as one or more nozzles. The openings or nozzles 42 release reaction products of the active material 43 after its activation/ignition/detonation. The design is such that the emitter 2 releases the reaction products in a more or less upward direction of figure 6, so that thrust is generated in a downward direction.

Figure 6 shows an embodiment where the emitter 2 is constructed as standalone device, meaning that both explosion detection and triggering of activation of the active material 43 is made at or inside the emitter 2. 61 symbolizes a detector, and 62 a triggering means and igniter/detonator upon detection. Detector 61 may be a crush element or crush switch that mechanically modifies upon experiencing significant acceleration. It may cause an igniter or detonator 62 to activate the active material 43. Activation may be electrically or mechanically or chemically. Such an embodiment does not require sophisticated detection and does not require external wiring or external components.

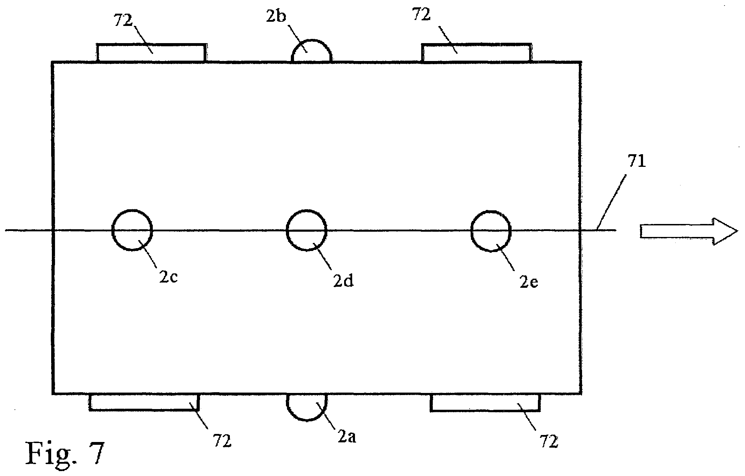

Figures 7, 8 and 9 show possibilities for arranging emitters 2 at a vehicle. Figure 7 is a top view on the vehicle. 71 symbolizes a center line of the vehicle in driving direction. The right side is assumed to be forward in driving direction, as indicated by the arrow. 72 symbolizes wheels of the vehicles. One or more emitters 2c, 2d and 2e may be provided on the rooftop of the vehicle. They may preferably be arranged along the center line 71. Besides, one or more emitters 2a, 2b may be provided on left and right outer side walls of the vehicle. It is noted that also these sideways emitters 2a, 2b may be constructed to generate a downward thrust, i.e. a thrust directed towards the ground surface. However, they also may be designed to generate a sideways or diagonal thrust, if it is desired to compensate for sidewards impact. Also one or more of the emitters 2c, 2d and 2e on the vehicle roof may be designed to generate sideways thrust. On each side of the vehicle, front and rear side included, one, two or more emitters 2 may be provided.

The arrangement seen in a top view may also be different from that shown in fig. 7. For example, emitters may be on the roof top of the vehicle close to corner portions thereof. Likewise, they may be on the roof top at or close to the elongated edges in the middle between corners limiting the respective edge. Likewise, emitters may be provided on the roof top along two arrangement lines parallel to the center line 71, but shifted against the center line 71 to the left and to the right, respectively, so that, for example, emitters sit on the roof top at, e.g., 25% and 75% of the vehicle width.

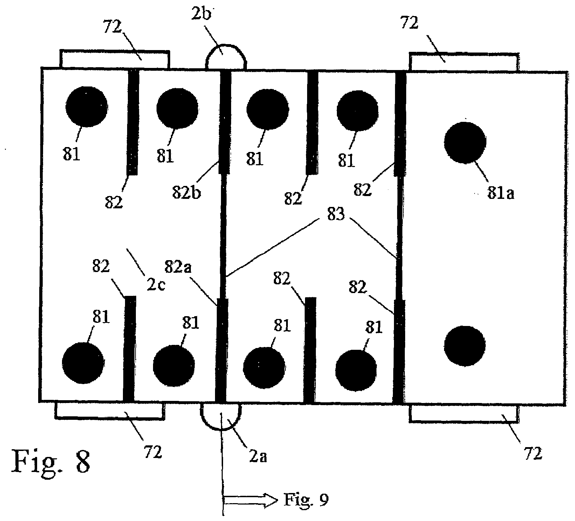

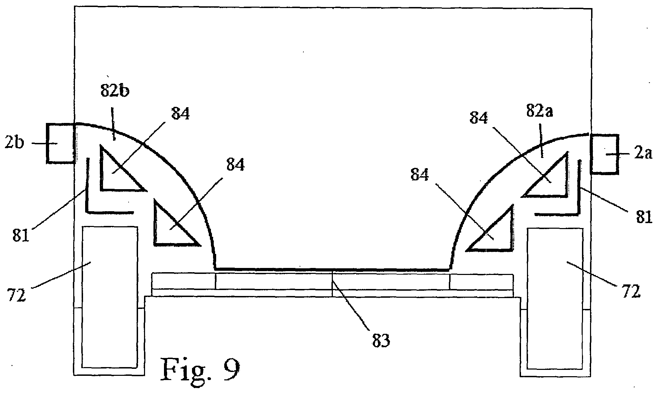

Figure 8 shows a more detailed arrangement. It is a schematic top view with the roof of the vehicle removed. 81 may be occupant's seats which may be provided in the rear compartment of the vehicle. 81a symbolizes the driver's seat. 82 symbolizes one or more bulkheads provided for reinforcing the structure of the vehicle. The bulkheads may be provided in a plane perpendicular to the forward direction (left-right in figure 8). They may be provided to reinforce the lower corners of the vehicle compartment, as shown in figure 9. The bulkheads may be metallic structures fitting into the corner(s) to be reinforced. In a widthwise direction, they may cover at least 20 % of the width W of the vehicle, and they may cover at least 20 % or 40% of the height H of the vehicle compartment. They may be attached to the side walls and to the bottom structure of the vehicle by screws, welding or the like. The bulkheads 82 may comprise cutouts or openings 84 for saving weight.

As shown in figure 8, emitters 2a and 2b mounted at the outer side wall of the vehicle may be mounted, seen in a longitudinal direction (left-right in figure 8) at position where bulkheads 82 are provided. Further, they may be connected to the bulkheads 82, either directly through, or indirectly via. the vehicle side wall. This ensures that the emitters 2 find a strong abutment, and the thrust generated by them is guided towards the bottom structure of the vehicle.

As shown in figure 9, opposing bulkheads 82a, 82b may be connected with their lower parts to each other and possibly also to the bottom portion of the vehicle through appropriate connecting means 83. This ensures that when receiving a load, the bulkheads 82 do not collapse towards each other.

If other reinforcing structures than bulkheads 82 are provided at or in or on vehicle side walls, the sideways emitters 2a, 2b may also be provided at or close to such other reinforcing structures and may directly or indirectly be connected thereto.

One aspect of the application is the stabilizing device as described above, but separate from the vehicle. It may be manufactured and marketed separately from a vehicle. It may then comprise the emitter 2 and appropriate detection installations 20 and triggering means 45 or software for implementing such functionalities on other hardware. Another aspect of the invention is a vehicle provided with the mentioned stabilization device. Yet another aspect of the invention is a vehicle prepared for receiving the stabilizing device, but not incorporating the stabilizing device, or not incorporating it completely. It may have dummy components instead.

A vehicle prepared for obtaining the stabilization device may comprise fixation means for attaching the emitter 2 to structural parts of the vehicle. It may further comprise wiring 35, for example for igniting/detonating/activating the emitter 2, and/or towards sensors and path pickup means. It may also comprise containing structures similar to numeral 49 shown in figure 4, that are, however, not filled with active substances.

A prepared vehicle may also comprise dummies for experiencing the spacial situation as if real components were mounted. Such a dummy may particularly have the outer shape, and take the position, of an emitter. The dummy may be made of a cheap material only provided for the purpose of experiencing and training in a special situation same as or similar to that when the real stabilization device is mounted.

The invention has been described so far as being applied to ground vehicles. It is not limited to this field. It may also be used for other artifacts to be protected such as ships or airplanes or for stationary structures such as buildings. An emitter 2 may be located on an outer surface of the artifact to be protected. Upward and downward directions described above with reference to vehicle protection may then generally be replaced by opposing directions that may also be horizontal or may have horizontal components. The explosion detection apparatus is then designed to detect explosions in the desired area, and the arrangement of emitters 2 is such that they act against the detected impact, particular develop thrust in a direction against the detected impact to be countered.

## Claims

1. Explosion detection apparatus (20) adapted to be used in a vehicle, comprising
a first detection device (31) for detecting an explosion based on electromagnetic waves and generating a first detection result signal,
a second detection device (32) for detecting an explosion based on a mechanical quantity and generating a second detection result signal,
**characterized by**
an explosion judging means (33) adapted to receive the first detection result signal from the first detection device (31) and the second detection result signal from the second detection device (32), and further adapted to judge that an explosion has occurred by evaluating both the received first detection result signal and the received second detection result signal.

2. Apparatus in accordance with claim 1, wherein the comparing means has means (34) for generating a quantitative measure for the explosion in accordance with the difference found between the compared data.

3. Apparatus in accordance with claim 1 or 2, having means for repeatedly operating the apparatus with a maximum time delay time between consecutive start times of less than 10 µs, preferably less than 5 µs.

4. Apparatus in accordance with claim 1 wherein the first detection device (31) may comprise one or more of radar equipment monitoring the path underneath the vehicle, particularly also the ground below the surface, light equipment or laser equipment evaluating transmitted and/or reflected and/or scattered light or laser light in the space underneath the vehicle, radio frequency equipment monitoring received radio frequency, preferably in one or more predetermined frequency bands, or infrared detection, preferably in the near infrared range (0.8pm - 1.5pm) and/or in the mid infrared range (1.5pm - 6pm) or in the far infrared range (6pm - 14pm), preferably by a thermopile,
and/or wherein the second detection device (32) may comprise one or more of a pressure sensor, an acceleration sensor, relative motion detection amongst vehicle components, one or more gyroscopes, a proximity sensor, a crush element.

5. Explosion detection apparatus according to claim 1 comprising one or more of
one or more infrared detectors, preferably in the near infrared range (0.8pm - 1.5pm) and/or in the mid infrared range (1.5pm - 6pm) or in the far infrared range (6pm - 14pm), preferably by a thermopile,
a crush element (61) or crush detector or crush switch,
a laser source, a fibre disposed in a vehicle component affected by the impact and conducting the laser light, and light monitoring means for monitoring a change in the transmitted light,
and further comprising a third explosion judging means judging that an explosion has occurred when a predetermined input is received from the infrared detectors, the crush element or the monitoring means.

6. A stabilizing device for stabilizing a vehicle against the effect of external impact, comprising
an emitter (2) for emitting material and having attachment means (44) for attaching the emitter to a structural part of the vehicle,
detection means (20) for detecting an external impact, and
triggering means (45) for triggering the emitter in accordance with the detection result from the detection means,
wherein the detection means is an apparatus 20 in accordance with one or more of the claims 1 to 5.

7. The device of claim 6 wherein
the detection means (20) has a detection apparatus for detecting an explosion based on electromagnetic waves or based on path pickup, and
the triggering means (45) has timing control means 51 for triggering the emitter such that triggering is effected in a predetermined time window after detection, the time window being preferably 50 µs to 150 µs after detection, and wherein the triggering means may comprise one or more of an electrical igniter, a laser igniter, an electrical detonator, a laser detonator, a stab detonator.

8. The device in accordance with claim 6 or 7 wherein
plural emitters (2a-2e) are provided that are separately ignitable,
the triggering means (45) is adapted to trigger selectively one emitter or plural or all emitters, and if plural or all emitters are triggered, triggering them at different points of time.

9. The device in accordance with claim 8, wherein some of the emitters are adapted to be mounted on an outside left or right side of the vehicle, and one or more of the emitters are adapted to be mounted on the roof of the vehicle.

10. The device of one or more of the claims 6 to 9, comprising
messaging means (47) for sending information upon detection of an explosion, and/or
actuating means (48) for actuating safety devices inside the vehicle upon detection of an explosion, particularly seat belts or intelligent clothing.

11. The device according to claim 6, wherein
the detection means (20) comprises a crush detector (61) provided at or inside the emitter (2), and
the triggering means (45) comprises a stab detonator (62) provided in the emitter (2).

12. The device of one or more of the claims 6 to 11, comprising a controller (48) that may comprise a sequential controller, an FPGA or two or more parallel processing units.

13. The device of one or more of the claims 6 to 12, wherein the emitter comprises an active substance such as an explosive or a combustible substance and is adapted to emit reaction products of the explosion or combustion.

14. A vehicle adapted for mounting a stabilizing device according to one or more of the claims 6 to 13, the vehicle comprising
a structure at a structural part of the vehicle for mounting or completing the emitter (2), and/or
wiring (35) of said stabilizing device, and
an explosion detection apparatus (20) of claim 1, wherein the vehicle does not comprise explosives or combustible material (43) in said emitter (2).

15. A vehicle according to claim 14 wherein the mounting structure comprises a container (49) adapted to receiving the explosives or combustible material (43) .

16. The vehicle of claims 14 or 15, comprising bulk heads (82) attached to an interior side wall and an interior bottom structure (100, 107) of the vehicle for reinforcing the vehicle compartment, wherein mounting structures for emitters are provided on an outside left and/or right side of the vehicle, and are provided, seen in a longitudinal direction of the vehicle, at or close to the bulk head positions or are connected thereto, and wherein bulk heads (82a, b) opposing each other in a lateral direction of the vehicle may have connecting means (83) mounted between them for connecting them at the level of the bottom structure.

17. A vehicle comprising the device according to one or more of the claims 6 to 13, wherein preferably plural emitters (2) are provided, wherein one or more (2a, b) of them may be mounted on an outside left and/or right side of the vehicle, and are provided, seen in a longitudinal direction of the vehicle, at or close to positions of reinforcing bulk heads (82) in the vehicle compartment, or are connected thereto.

## Patentansprüche

1. Explosionsdetektionsvorrichtung (20), die zur Verwendung in einem Fahrzeug angepasst ist, umfassend:
eine erste Detektionsvorrichtung (31) zum Detektieren einer Explosion auf Grundlage elektromagnetischer Wellen und zum Erzeugen eines ersten Detektionsergebnissignals,
eine zweite Detektionsvorrichtung (32) zum Detektieren einer Explosion auf Grundlage einer mechanischen Größe und zum Erzeugen eines zweiten Detektionsergebnissignals,
**gekennzeichnet durch**
ein Explosionsbeurteilungsmittel (33), das derart ausgebildet ist, das erste Detektionsergebnissignal von der ersten Detektionsvorrichtung (31) und
das zweite Detektionsergebnissignal von der zweiten Detektionsvorrichtung (32) zu empfangen, und ferner derart ausgebildet ist, um zu beurteilen, dass eine Explosion stattgefunden hat, in dem sowohl das empfangene erste Detektionsergebnissignal und das empfangene zweite Detektionsergebnissignal bewertet werden.

2. Vorrichtung nach Anspruch 1, wobei das Vergleichsmittel ein Mittel (34) zum Erzeugen eines quantitativen Maßes für die Explosion gemäß der zwischen den verglichenen Daten gefundenen Differenz aufweist.

3. Vorrichtung nach einem der Ansprüche 1 oder 2, mit einem Mittel zum wiederholten Betreiben der Vorrichtung mit einer maximalen Verzögerungszeit zwischen aufeinanderfolgenden Startzeiten von weniger als 10 µs, bevorzugt weniger als 5 µs.

4. Vorrichtung nach Anspruch 1, wobei die erste Detektionsvorrichtung (31) eines oder mehrere aus einer Radarausstattung, die den Pfad unterhalb des Fahrzeugs, bevorzugt auch den Boden unterhalb der Oberfläche überwacht, Lichtausstattung oder Laserausstattung, die übertragenes und/oder reflektiertes und/oder gestreutes Licht oder Laserlicht in dem Raum unterhalb des Fahrzeugs bewertet, Hochfrequenzausstattung, die empfangene Hochfrequenz bevorzugt in einem oder mehreren vorbestimmten Frequenzbändern überwacht, oder Infrarotdetektion bevorzugt in dem nahen Infrarotbereich (0,8 µm bis 1,5 µm) und/oder in dem mittleren Infrarotbereich (1,5 µm bis 6 µm) oder in dem weiten Infrarotbereich (6µm bis 14 µm) bevorzugt durch eine Thermosäule umfassen kann,
und/oder wobei die zweite Detektionsvorrichtung (32) eines oder mehrere aus einem Drucksensor, einem Beschleunigungssensor, einer Relativbewegungsdetektion unter den Fahrzeugkomponenten, einem oder mehreren Gyroskopen, einem Näherungssensor oder sowie einem Aufprallelement umfassen kann.

5. Explosionsdetektionsvorrichtung nach Anspruch 1, mit einem oder mehreren aus:
einem oder mehreren Infrarotdetektoren bevorzugt im nahen Infrarotbereich (0,8 µm bis 1,5 µm) und/oder in dem mittleren Infrarotbereich (1,5 µm bis 6 µm) oder in dem weiten Infrarotbereich (6 µm bis 14 µm) bevorzugt durch eine Thermosäule,
ein Eindrückelement (61) oder einen Eindrückdetektor oder Eindrückschalter,
eine Laserquelle, eine in einer Fahrzeugkomponente angeordnete Faser,
die durch das Eindrücken beeinflusst wird und das Laserlicht leitet, sowie ein Lichtüberwachungsmittel zum Überwachen einer Änderung in dem übertragenen Licht,
und ferner mit einem dritten Explosionsbeurteilungsmittel, das beurteilt,
dass eine Explosion stattgefunden hat, wenn ein vorbestimmter Eingang von den Infrarotdetektoren, dem Eindrückelement oder dem Überwachungsmittel empfangen wird.

6. Stabilisierungsvorrichtung zum Stabilisieren eines Fahrzeugs gegen die Wirkung eines externen Aufpralls, umfassend:
einen Emitter (2) zum Emittieren von Material und mit einem Befestigungsmittel (44) zum Befestigen des Emitters an einem Bauteil des Fahrzeugs,
ein Detektionsmittel (20) zum Detektieren eines externen Aufpralls, und
ein Auslösemittel (45) zum Auslösen des Emitters gemäß dem Detektionsergebnis von dem Detektionsmittel,
wobei das Detektionsmittel eine Vorrichtung (20) nach einem der Ansprüche 1 bis 5 ist.

7. Vorrichtung nach Anspruch 6, wobei:
das Detektionsmittel (20) eine Detektionsvorrichtung zum Detektieren einer Explosion auf Grundlage elektromagnetischer Wellen oder auf Grundlage eines Weggebers aufweist, und
das Auslösemittel (45) ein Zeitsteuermittel (51) zum Auslösen des Emitters aufweist, sodass das Auslösen in einem vorbestimmten Zeitfenster nach Detektion bewirkt wird, wobei das Zeitfenster bevorzugt 50 µs bis 150 µs nach Detektion beträgt, und wobei das Auslösemittel eines oder mehrere aus einer elektrischen Zündeinrichtung, einer Laserzündeinrichtung, einem elektrischen Detonator, einem Laserdetonator, einem Stabdetonator umfassen kann.

8. Vorrichtung nach einem der Ansprüche 6 oder 7,
wobei,
mehrere Emitter (2a bis 2e) so vorgesehen sind, dass sie separat zündbar sind,
wobei das Auslösemittel (45) derart angepasst ist, selektiv einen Emitter oder mehrere oder alle Emitter auszulösen, und falls mehrere oder alle Emitter ausgelöst sind, diese zu verschiedenen Zeitpunkten auszulösen.

9. Vorrichtung nach Anspruch 8, wobei einige der Emitter zur Montage an einer äußeren linken oder rechten Seite des Fahrzeugs angepasst sind und ein oder mehrere der Emitter zur Montage an dem Dach des Fahrzeugs angepasst sind.

10. Vorrichtung nach einem der Ansprüche 6 bis 9, umfassend:
ein Benachrichtigungsmittel (47) zum Senden von Information bezüglich der Detektion einer Explosion und/oder
ein Betätigungsmittel (48) zum Betätigen von Sicherheitsvorrichtungen innerhalb des Fahrzeugs bei Detektion einer Explosion, insbesondere Sicherheitsgurte oder intelligente Kleidung.

11. Vorrichtung nach Anspruch 6, wobei
das Detektionsmittel (20) einen Eindrückdetektor (61) umfasst, der an oder innerhalb des Emitters (2) vorgesehen ist, und
das Auslösemittel (45) einen Stabdetonator (62) umfasst, der in dem Emitter (2) vorgesehen ist.

12. Vorrichtung nach einem der Ansprüche 6 bis 11 mit einem Kontroller (48), der ein sequenzieller Kontroller, ein FPGA oder zwei oder mehr parallele Verarbeitungseinheiten umfassen kann.

13. Vorrichtung nach einem der Ansprüche 6 bis 12, wobei der Emitter eine aktive Substanz umfasst, wie ein Explosivstoff oder eine brennbare Substanz, und derart angepasst ist, Reaktionsprodukte der Explosion oder Verbrennung zu senden.

14. Fahrzeug, das zur Montage einer Stabilisierungsvorrichtung nach einem der Ansprüche 6 bis 13 angepasst ist, wobei das Fahrzeug umfasst:
einen Aufbau an einem Bauteil des Fahrzeugs zur Montage oder Vervollständigung des Emitters (2) und/oder
eine Verdrahtung (35) der Stabilisierungsvorrichtung, und
eine Explosionsdetektionsvorrichtung (20) nach Anspruch 1,
wobei das Fahrzeug keine Explosivstoffe oder brennbares Material (43) in dem Emitter (2) umfasst.

15. Fahrzeug nach Anspruch 14, wobei der Montageaufbau einen Behälter (49) umfasst, der zur Aufnahme der Explosivstoffe oder des brennbaren Materials (43) angepasst ist.

16. Fahrzeug nach einem der Ansprüche 14 oder 15, mit Trennwänden (82), die an einer inneren Seitenwand und an einem inneren Bodenaufbau (100, 107) des Fahrzeugs zur Verstärkung des Fahrzeugraumes befestigt sind, wobei Montageaufbauten für Emitter an der äußeren linken und/oder rechten Seite des Fahrzeugs vorgesehen sind und in einer Längsrichtung des Fahrzeugs betrachtet an oder nahe den Trennwandpositionen vorgesehen oder damit verbunden sind, und wobei die Trennwände (82a, b), die einander in einer lateralen Richtung des Fahrzeugs gegenüberliegen, ein Verbindungsmittel (83) aufweisen können, das zwischen diesen zur Verbindung derselben auf dem Niveau des Bodenaufbaues montiert ist.

17. Fahrzeug mit der Vorrichtung nach einem der Ansprüche 6 bis 13, wobei bevorzugt mehrere Emitter (2) vorgesehen sind, wobei einer oder mehrere (2a, b) derselben an einer äußeren linken und/oder rechten Seite des Fahrzeugs montiert sein können und in einer Längsrichtung des Fahrzeugs betrachtet an oder nahe Positionen von verstärkenden Trennwänden (82) in dem Fahrzeugraum vorgesehen oder damit verbunden sind.

## Revendications

1. Appareil de détection d'explosion (20) adapté à être utilisé dans un véhicule, comprenant
un premier dispositif de détection (31) pour détecter une explosion sur la base d'ondes électromagnétiques et pour générer un premier signal de résultat de détection,
un second dispositif de détection (32) pour détecter une explosion sur la base d'une quantité mécanique et pour générer un second signal de résultat de détection,
**caractérisé par**
un moyen de jugement d'explosion (33) adapté pour recevoir le premier signal de résultat de détection provenant du premier dispositif de détection (31) et le second signal de résultat de détection provenant du second dispositif de détection (32), et adapté en outre pour juger qu'une explosion s'est produite en évaluant à la fois le premier signal de résultat de détection reçu et le second signal de résultat de détection reçu.

2. Appareil selon la revendication 1, dans lequel le moyen de comparaison comprend un moyen (34) pour générer une mesure quantitative pour l'explosion en accord avec la différence trouvée entre les données comparées.

3. Appareil selon la revendication 1 ou 2, comprenant des moyens pour faire fonctionner l'appareil de manière répétée avec un retard temporel maximum entre des instants de démarrage consécutifs inférieur à 10 µs, de préférence inférieur à 5 µs.

4. Appareil selon la revendication 1, dans lequel le premier dispositif de détection (31) peut comprendre un ou plusieurs équipements parmi un équipement radar qui surveille la voie au-dessous du véhicule, en particulier également le sol au-dessous de la surface, un équipement lumineux ou un équipement à laser qui évalue la lumière ou la lumière laser transmise et/ou réfléchie et/ou diffusée dans l'espace au-dessous du véhicule, un équipement à radiofréquences qui surveille les radiofréquences reçues, de préférence dans une ou plusieurs bandes de fréquences prédéterminées, ou un équipement de détection infrarouge, de préférence dans la plage infrarouge proche (0,8 µm à 1,5 µm) et/ou dans la plage infrarouge médiane (1,5 µm à 6 µm) ou dans la plage infrarouge lointaine (6 µm à 14 µm), de préférence par une thermopile,
et/ou dans lequel le second dispositif de détection (32) peut comprendre un ou plusieurs capteurs parmi un capteur de pression, un capteur d'accélération, un capteur de détection de mouvement relatif parmi les composants du véhicule, un ou plusieurs capteurs gyroscopiques, un capteur de proximité, et un capteur d'écrasement.

5. Appareil de détection d'explosion selon la revendication 1, comprenant une ou plusieurs des options suivantes :
un ou plusieurs détecteurs infrarouges, de préférence dans la plage infrarouge proche (0,8 µm à 1,5 µm, et/ou dans la plage infrarouge médiane (1,5 µm à 6 µm) ou dans la plage infrarouge lointaine (6 µm à 14 µm), de préférence par une thermopile,
un élément à écrasement (61) ou un détecteur à écrasement ou un commutateur à écrasement,
une source laser, une fibre disposée dans un composant du véhicule affecté par l'impact et menant la lumière laser, et un moyen de surveillance de lumière pour surveiller un changement de la lumière transmise,
et comprenant en outre un troisième moyen de jugement d'explosion qui juge qu'une explosion s'est produite quand une entrée prédéterminée est reçue depuis les détecteurs infrarouges, l'élément à écrasement ou le moyen de surveillance.

6. Dispositif de stabilisation pour stabiliser un véhicule à l'encontre des effets d'un impact externe, comprenant
un émetteur (2) pour émettre une matière et comprenant un moyen d'attache (44) pour attacher l'émetteur sur une partie structurelle du véhicule,
un moyen de détection (20) pour détecter un impact externe, et
un moyen de déclenchement (45) pour déclencher l'émetteur en accord avec le résultat de détection provenant du moyen de détection,
dans lequel le moyen de détection est un appareil (20) selon l'une ou plusieurs des revendications 1 à 5.

7. Dispositif selon la revendication 6, dans lequel
le moyen de détection (20) comprend un appareil de détection pour détecter une explosion sur la base d'ondes électromagnétiques ou sur la base d'images prises de la voie, et
le moyen de déclenchement (45) comprend un moyen de commande de temporisation (51) pour déclencher l'émetteur de telle façon que le déclenchement est effectué dans une fenêtre temporelle prédéterminée après la détection, la fenêtre temporelle étant de préférence de 50 µs à 150 µs après détection, et dans lequel le moyen de déclenchement peut comprendre un ou plusieurs dispositifs parmi un amorçage électrique, un amorçage à laser, un détonateur électrique, un détonateur à laser, ou un détonateur à percussion.

8. Dispositif selon la revendication 6 ou 7, dans lequel
il est prévu une pluralité d'émetteurs (2a-2e) qui peuvent être séparément amorcés,
le moyen de déclenchement (45) est adapté pour déclencher sélectivement un émetteur ou une pluralité d'émetteurs ou encore tous les émetteurs, et si une pluralité d'émetteurs ou tous les émetteurs sont déclenchés, pour les déclencher à des instants différents.

9. Dispositif selon la revendication 8, dans lequel certains des émetteurs sont adaptés à être montés sur un côté extérieur gauche ou droit du véhicule, et un ou plusieurs des émetteurs sont adaptés pour être montés sur le toit du véhicule.

10. Dispositif selon l'une ou plusieurs des revendications 6 à 9, comprenant un moyen de messagerie (47) pour envoyer une information lors de la détection d'une explosion, et/ou
un moyen d'actionnement (48) pour actionner des dispositifs de sécurité à l'intérieur du véhicule lors de la détection d'une explosion, en particulier des ceintures de siège ou des vêtements intelligents.

11. Dispositif selon la revendication 6, dans lequel
le moyen de détection (20) comprend un détecteur d'écrasement (61) prévu au niveau de l'émetteur (2) ou à l'intérieur de celui-ci, et
le moyen de déclenchement (45) comprend un détonateur à percussion (62) prévu dans l'émetteur (2).

12. Dispositif selon l'une ou plusieurs des revendications 6 à 11, comprenant un contrôleur (48) qui peut comprendre un contrôleur séquentiel, une unité FPGA ou deux ou plusieurs unités de processeurs parallèles.

13. Dispositif selon l'une ou plusieurs des revendications 6 à 12, dans lequel l'émetteur comprend une substance active comme un explosif ou une substance combustible, et il est adapté pour émettre des produits de réaction de l'explosion ou de la combustion.

14. Véhicule adapté pour le montage d'un dispositif de stabilisation selon l'une ou plusieurs des revendications 6 à 13, le véhicule comprenant une structure au niveau d'une partie structurelle du véhicule destinée à monter ou à compléter l'émetteur (2), et/ou un câblage (35) dudit dispositif de stabilisation, et
un appareil de détection d'explosion (20) selon la revendication 1,
dans lequel le véhicule ne comprend pas de matières explosives ou de matières combustibles (43) dans ledit émetteur (2).

15. Véhicule selon la revendication 14, dans lequel la structure de montage comprend un conteneur (49) adapté pour recevoir les matières explosives ou combustibles (43).

16. Véhicule selon les revendications 14 ou 15, comprenant des tabliers (82) attachés à une paroi latérale intérieure et une structure de fond intérieure (100, 107) du véhicule pour renforcer le compartiment du véhicule, dans lequel des structures de montage pour des émetteurs sont prévues sur un côté extérieur gauche et/ou droit du véhicule, et sont prévues, vues dans une direction longitudinale du véhicule, au niveau ou à proximité des positions des tabliers ou sont connectées à ceux-ci, et dans lequel des tabliers (82a, b) opposés l'un à l'autre dans une direction latérale du véhicule peuvent comprendre des moyens de connexion (83) montés entre eux pour les connecter au niveau de la structure de fond.

17. Véhicule comprenant le dispositif selon l'une ou plusieurs des revendications 6 à 13, dans lequel il est de préférence prévu une pluralité d'émetteurs (2), dans lequel un ou plusieurs (2a, b) de ces émetteurs peuvent être montés sur un côté extérieur gauche et/ou droit du véhicule, et sont prévus, vus dans une direction longitudinale du véhicule, au niveau ou à proximité des positions des tabliers de renforcement (82) dans le compartiment du véhicule, ou sont connectés à ceux-ci.
